# EUROPEAN PATENT SPECIFICATION

(11) **EP 4 072 203 B1**
(45) Date of publication and mention of the grant of the patent: **05.03.2025**
(21) Application number: 22156574.0
(22) Date of filing: 14.02.2022
(51) Int. Cl.: H04W 8/00, H04W 8/18, H04W 36/12, H04W 36/14, H04W 36/26, H04W 48/16, H04W 76/12, H04W 88/16

(54) **PACKET DATA NETWORK GATEWAY (PGW) RESELECTION FOR NETWORK SLICING**
PAKETDATEN-NETZGATEWAY (PGW) WIEDERAUSWAHL FÜR NETZWERK SLICING
RESÉLECTION DE PASSERELLE DE RÉSEAU DE DONNÉES PAR PAQUETS (PGW) POUR DÉCOUPAGE DE RÉSEAU

(30) Priority: 16.02.2021 US 202163149703 P
(43) Date of publication of application: 12.10.2022
(73) Proprietor: Nokia Technologies Oy, 02610 Espoo (FI)
(72) Inventor: LANDAIS, Bruno, Pleumeur-Bodou (FR); HELLGREN, Vesa Pauli, Helsinki (FI); ZENG, Surong, Santa Clara (US); DHEKANE, Pranav, Santa Clara (US)
(74) Representative: Script Intellectual Property LLP

(56) References cited:
- WO-A1-2017/162295
- ERICSSON: "PGW Selection and the Create Session Request message", vol. CT WG4, no. E-Meeting; 20200217 - 20200228, 5 March 2020 (2020-03-05), XP051859480, Retrieved from the Internet <URL:https://ftp.3gpp.org/tsg_ct/TSG_CT/TSGC_87e/Docs/CP-200046.zip 29274_CR1978r3_(Rel-16)_C4-201179was1085was0502_v1_CSR PA3.docx> [retrieved on 20200305]
- NOKIA ET AL: "Restoration of PDN connections after a PGW-C/SMF change", vol. CT WG4, no. E-Meeting; 20201103 - 20201113, 11 November 2020 (2020-11-11), XP051953974, Retrieved from the Internet <URL:https://ftp.3gpp.org/tsg_ct/WG4_protocollars_ex-CN4/TSGCT4_101e_meeting/Docs/C4-205689.zip C4-205689_23007_Rel17_Restoration of PDN connections.docx> [retrieved on 20201111]
- "3rd Generation Partnership Project; Technical Specification Group Core Network and Terminals; 3GPP Evolved Packet System (EPS); Evolved General Packet Radio Service (GPRS) Tunnelling Protocol for Control plane (GTPv2-C); Stage 3; (Release 17)", vol. CT WG4, no. V17.0.0, 11 December 2020 (2020-12-11), pages 1 - 402, XP051999982, Retrieved from the Internet <URL:https://ftp.3gpp.org/Specs/latest/Rel-17/29_series/29274-h00.zip 29274-h00.docx> [retrieved on 20201211]
- NOKIA ET AL: "PGW reselection by rejecting CSReq with new PGW address", vol. CT WG4, no. E-Meeting; 20210224 - 20210305, 22 March 2021 (2021-03-22), XP051989496, Retrieved from the Internet <URL:https://ftp.3gpp.org/tsg_ct/TSG_CT/TSGC_91e/Docs/CP-210033.zip 29274_CR2004r2_(Rel-17)_C4-211705_29274_Rel17_PGW reselection by rejecting CSReq with new PGW address.docx> [retrieved on 20210322]

## Description

### FIELD:

Some example embodiments may generally relate to communications including mobile or wireless telecommunication systems, such as Long Term Evolution (LTE) or fifth generation (5G) radio access technology or new radio (NR) access technology, or other communications systems. For example, certain example embodiments may generally relate to methods, apparatuses and/or systems for packet data network gateway (PGW) reselection for network slicing.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. A 5G system is mostly built on a 5G new radio (NR), but a 5G (or NG) network can also build on the E-UTRA radio. It is estimated that NR provides bitrates on the order of 10-20 Gbit/s or higher, and can support at least service categories such as enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. The next generation radio access network (NG-RAN) represents the RAN for 5G, which can provide both NR and LTE (and LTE-Advanced) radio accesses. It is noted that, in 5G, the nodes that can provide radio access functionality to a user equipment (i.e., similar to the Node B, NB, in UTRAN or the evolved NB, eNB, in LTE) may be named next-generation NB (gNB) when built on NR radio and may be named next-generation eNB (NG-eNB) when built on E-UTRA radio. 3GPP C4-201179 discloses PGW selection and related Create Session Request and Create Session Response messages. 3GPP C4-205689 relates to the restoration of PDN connections after a PGW-C/SMF change, wherein the PGW-C/SMF returns a PGW Change Info IE in the Create Session Response message which contains a PGW Set FQDN.

### SUMMARY:

The invention is defined in the claims.

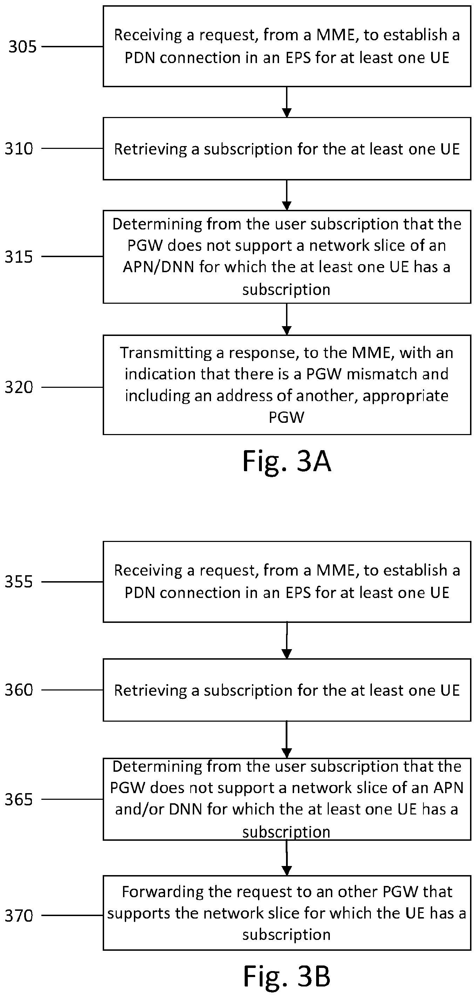

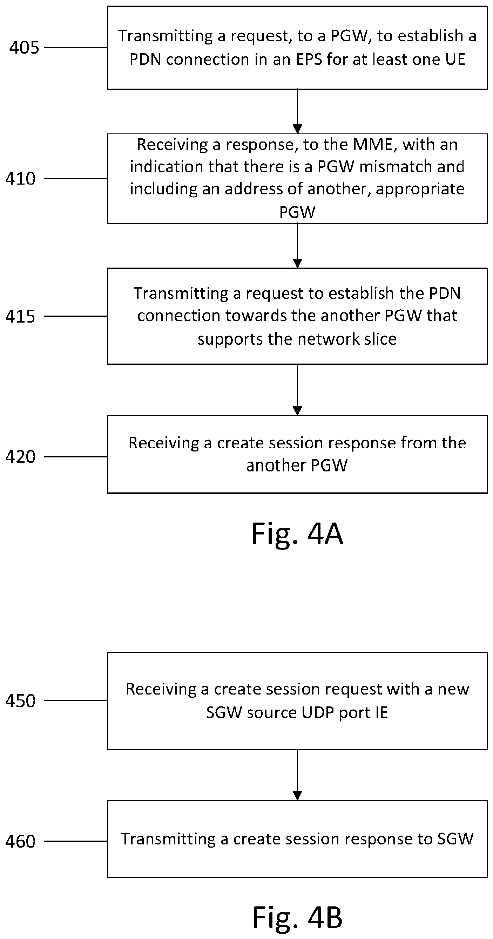

In the following description, the invention is described with particular reference to figures 3A and 4A, while the description of the remaining figures is provided for illustrative purposes for a better understanding of the invention.

### BRIEF DESCRIPTION OF THE DRAWINGS:

For proper understanding of example embodiments, reference should be made to the accompanying drawings, wherein:
Fig. 1 illustrates an example signaling diagram, according to an embodiment;
Fig. 2 illustrates an example signaling diagram, according to an embodiment;
Fig. 3A illustrates a flow diagram of a method, according to an embodiment;
Fig. 3B illustrates a flow diagram of a method, according to an embodiment;
Fig. 4A illustrates a flow diagram of a method, according to an embodiment;
Fig. 4B illustrates a flow diagram of a method, according to an embodiment;
Fig. 5A illustrates an example block diagram of an apparatus, according to an embodiment; and
Fig. 5B illustrates an example block diagram of an apparatus, according to an embodiment.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for packet data network gateway (PGW) selection for network slicing, is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments.

Additionally, if desired, the different functions or procedures discussed below may be performed in a different order and/or concurrently with each other. Furthermore, if desired, one or more of the described functions or procedures may be optional or may be combined. As such, the following description should be considered as illustrative of the principles and teachings of certain example embodiments, and not in limitation thereof.

Certain embodiments described herein may relate to procedures to support the evolved packet system (EPS) and 5G system (5GS) interworking. For EPS and 5GS interworking, several problems can arise. In particular, one problem may arise when a UE establishes a connection with EPS and then later moves to 5GS. During a UE's packet data network (PDN) connection establishment in EPS, the mobility management entity (MME) may select a PGW. This selection may be based, in part, on the acess point name (APN) / data network name (DNN).

Generally, an APN/DNN may be supported by multiple network slices. On the other hand, a PGW may support different network slices. An MME, not aware of the network slices (which were basically introduced with 5G), could therefore, during establishment of a UE's PDN connection, select a PGW that supports the requested APN/DNN, but the selected PGW might not support the network slice the user has a subscription for. This would then, later on, cause EPS to 5GS mobility failure when the UE moves from EPS to 5GS.

For instance, for a network deployment with EPS and 5GS, when the same APN/DNN is supported by different network slices and the dedicated core network (DCN) feature is not supported in EPS, or in the visited public land mobile network (VPLMN) in roaming scenarios, the MME may select (during the establishment of the UE's PDN connection) a PGW supporting the requested APN/DNN, but not supporting the network slice (NS) for which the user has a subscription.

As an example, one APN/DNN can be supported by two different network slices, NS1 and NS2 (e.g., having single network slice assistance information (S-NSSAI) 100 and S-NSSAI 101, respectively), where a first PGW (PGW1) supports the APN/DNN but just NS1 (S-NSSAI 100) and a second PGW (PGW2) supports the APN/DNN but just NS2 (S-NSSAI 101). The UE has a user subscription for this APN/DNN and just NS2 (S-NSSAI 101).

During the establishment of the UE's PDN connection in EPS, the MME does a domain name system (DNS) query using the APN fully qualified domain name (FQDN) set to the requested APN, and discovers that PGW1 and PGW2 support the APN/DNN. Since the MME does not know the 5GS subscription of the UE, nor which network slice each PGW supports, it may select the "wrong" PGW, PGW 1, and attempt to establish the PDN connection towards PGW1.

If PGW1 has an interface with the unified data management (UDM), it can retrieve the (5G) user subscription. From the user subscription, PGW1 may determine that it does not support the network slice for which the user has a subscription (e.g., NS2), and PGW1 may discover another PGW, here PGW2, that supports the requested APN/DNN and the network slice (NS2) subscribed by the UE. Not doing so would cause EPS to 5GS mobility failure when the UE later moves from EPS to 5GS.

Extensions have been proposed that enable the first PGW initially selected by an MME to forward a Create Session Request to a second PGW. This proposed solution requires the following signaling paths: for the Create Session Request: MME->SGW->PGW1->PGW2, and for the Create Session Response: PGW2->PGW1->SGW->MME.

In this respect, PGW1 forwards the Create Session Request to PGW2, during the PDN connection establishment. PGW1 includes the sender fully qualified tunnel endpoint identifier (F-TEID) received from the SGW, and sets the source IP address and the source UDP port as its own IP address. The PGW2 is not aware that the Create Session Request message was transferred from another PGW.

The proposed solution presents several issues. First, redirection from PGW1 to PGW2 assumes that both PGWs are not in slices isolated from each other, as the Create Session Response message is sent back to the forwarding PGW that forwards it to the SGW. It is therefore assumed that GTPv2/UDP/IP connectivity between the source PGW/session management function (SMF) and the target PGW/SMF which are in different slices is allowed in such network deployment. As such, such a solution does not work for deployments where network slices are isolated with no connectivity between the PGWs.

Further, the proposed solution adds significant complexity to the PGW (PGW1). PGW1 has to store the SGW source address/port received in the Create Session Request in order to set the correct destination address/port when forwarding the Create Session Response. To handle possible SGW retransmissions of the Create Session Request, PGW1 should also store the PGW2 address, so that retransmissions are sent to the same PGW2. This requires building a new "session database" where the retrieval key might be the SGW F-TEID, because TEID is not allocated in PGW1. Receiving GTP-C messages (CSResponse) where TEID in the header is not locally assigned may also be problematic for the internal routing of the messages and might cause issues if the TEID assigned by SGW is also assigned by PGW1 for another session.

So, with the proposed solution, a Create Session Request cannot be forwarded between two PGWs from isolated network slices and consequenlty EPS to 5GS mobility procedure may fail in such case. Additionally, it adds significant complexity to the PGW implementation.

Therefore, as will be discussed in detail below, some example embodiments provide an approach that can overcome at least the issues posed above.

According to one example embodiment, if a PGW (e.g., PGW1) reecives a Create Session Request from the MME and then determines that it does not support the network slice that the UE has a user subscription for, the PGW (e.g., PGW1) may reject the Create Session Request towards the MME with a new cause indicating "PGW mismatch with network slice subscribed by the UE" and with the FQDN or IP address of a different PGW (e.g., PGW 2) that the MME should use for establishing the PDN connection. In certain embodiments, the PGW (e.g., PGW1) may discover the different PGW (e.g., PGW2) using a network repository function (NRF) network function (NF) discovery procedure and/or through local configuration. The MME can then request to establish the PDN connection towards that different PGW (PGW2).

In another example embodiment, the PGW (PGW1) may forward the Create Session Request to the other PGW (PGW2), but include a new information element (IE) in the forwarded Create Session Request to convey the SGW source port information (i.e., source port number of the Create Session Request received by PGW1) such as to enable PGW2 to send a successful Create Session Response directly to the SGW, i.e., with the following signalling paths: Create Session Request: MME->SGW->PGW1->PGW2, and Create Session Response: PGW2->SGW->MME. Hence, the IE included by PGW1 in the forwarded Create Session Request indicates to the PGW2 to direclty reply back to the SGW, rather than via PGW1.

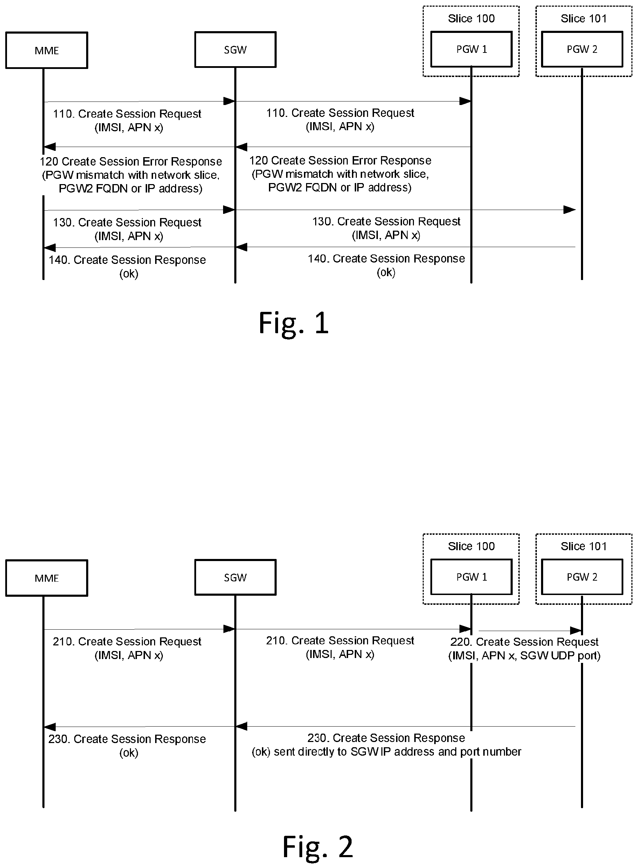

Fig. 1 illustrates an example signaling diagram, according to certain example embodiments. In the example of Fig. 1, the signaling diagram may include a MME, SGW, PGW1 supporting slice 100, and PGW2 supporting slice 101.

As illustrated in the example of Fig. 1, at 110, a MME may transmit, to a receiving PGW (PGW1) via the SGW, a Create Session Request to establish a PDN connection for a UE in EPS. Upon receipt of the Create Session Request, if the receiving PGW (PGW1) determines, after retrieving the user subscription from UDM, that it (PGW1) does not support the network slice of the APN/DNN for which the UE has a subscription, the PGW1 may, at 120, reject the Create Session Request towards the MME with a new error cause indicating a PGW mismatch with the network slice subscribed by the UE and with the FQDN or IP address of a different PGW (PGW 2). Thus, in an embodiment, the error cause for "PGW mismatch with network slice subscribed by the UE" may be used by the PGW in the Create Session Response message during an EPS to 5GS mobility procedure, to indicate that the PGW is not serving the network slice subscribed by the UE for the APN/DNN. In certain embodiments, the PGW (e.g., PGW1) may discover the other PGW (e.g., PGW2) using a NRF NF discovery procedure (i.e., NF discovery request with query parameters identifying the APN/DNN and the network slice subscribed by the UE) and/or through local configuration. As further illustrated in the example of Fig. 1, the MME can then, at 130, transmit a Create Session Request to establish the PDN connection towards PGW2. As also illustrated in the example of Fig. 1, at 140, the MME may receive a Create Session Response from PGW2.

According to some example embodiments, new IEs for an alternative PGW-C/SMF FQDN and alternative PGW-C/SMF IP address are shown in Table 1 below. These alternative IEs may be defined in the Create Session Response.

As described above, Fig. 1 is provided as one example. Other examples are possible, according to some embodiments.

**Table 1**

| | | | | |
|---|---|---|---|---|
| Alternative PGW-C/SMF FQDN | O | This IE may be included by the PGW on the S5/S8 interfaces, when the PGW rejects the Create Session Request with the cause "PGW mismatch with network slice subscribed by the UE". | FQDN | 3 |
| | | If the SGW receives this IE, the SGW shall forward it to the MME over the S11 interface. | | |
| | | When present, the IE shall contain the FQDN of the other PGW that the MME should use for establishing the PDN connection. | | |
| Alternative PGW-C/SMF IP Address | O | This IE may be included by the PGW on the S5/S8 interfaces, when the PGW rejects the Create Session Request with the cause "PGW mismatch with network slice subscribed by the UE". | IP Address | 1 |
| | | If the SGW receives this IE, the SGW shall forward it to the MME over the S11 interface. | | |
| | | When present, the IE shall contain the IP Address of the other PGW that the MME should use for establishing the PDN connection. | | |

Fig. 2 illustrates an example signaling diagram, according to another example embodiments. In the example of Fig. 2, the signaling diagram may include a MME, SGW, PGW1 supporting slice 100, and PGW2 supporting slice 101.

As illustrated in the example of Fig. 2, at 210, a MME may transmit, to a receiving PGW (PGW1) via the SGW, a Create Session Request to establish a PDN connection for a UE in EPS. In the example of Fig. 2, at 220, PGW1 may forward the Create Session Request to PGW2, and include a new IE in the forwarded Create Session Request to convey the SGW UDP port number (i.e., source UDP port number of the Create Session Request received by PGW1) such as to enable PGW2 to send a successful Create Session Response directly to the SGW. Thus, in this embodiment, the Create Session Request may be sent along the following signalling path: MME->SGW->PGW1->PGW2, and the Create Session Response may be sent along the following singalling path: PGW2->SGW->MME.

According to the example embodiment of Fig. 2, a new IE for a SGW source UDP Port Number, as shown in Table 2 belowk, may be defined in the Create Session Request.

**Table 2**

| | | | | |
|---|---|---|---|---|
| SGW source UDP Port Number | C | This IE shall be included in the Create Session Request that is forwarded from a first PGW to another PGW. When present, it shall be set to the source UDP port of the incoming message received by the forwarding PGW. | Port Number | 0 |

As further illustrated in the example of Fig. 2, upon receipt of this new IE, at 230, PGW2 may send the Create Session Response directly to the SGW IP address and UDP port number. The SGW IP address is already available in the existing message (in Sender F-TEID IE).

As outlined above, Fig. 2 is provided as one example. It is noted that other examples are possible, according to some embodiments.

Fig. 3A illustrates a flow chart of a method of packet data network gateway (PGW) reselection for network slicing, according to a claimed embodiment. In certain example embodiments, the flow diagram of Fig. 3A may be performed by a network entity or network node in a communications system, such as LTE or 5G NR. According to the invention, the network entity performing one or more of the procedures depicted in Fig. 3A includes or is included in a network gateway, such as a PGW. Fig. 3A includes one or more procedures performed by PGW1 in the examples of Figs. 1 and 2.

As illustrated in Fig. 3A, the method includes, at 305, receiving a request from a network entity, such as a MME, to establish PDN connection for at least one UE in an EPS. The request is a create session request to establish the packet data network (PDN) connection in the evolved packet system (EPS). The method includes, at 310, retrieving a subscription for the at least one UE. The retrieving 310 includes retrieving the user subscription from a UDM or other location in which the user subscription may be stored. According to the invention, the method includes, at 315, determining from the user subscription that the PGW does not support a network slice of an APN and/or DNN for which the at least one UE has a subscription.

When it is determined, after retrieving the user subscription, that the PGW does not support the network slice of the APN and/or DNN for which the at least one UE has a subscription, the method includes discovering an address of another PGW that supports the APN and/or DNN and the network slice, e.g., using a NRF NF discovery procedure or through local configuration and, at 320, transmitting a response to the network entity. The response includes an indication that there is a PGW mismatch with the network slice subscribed to by the at least one UE and includes an address of the other PGW that supports the network slice. For example, the transmitting 320 may include transmitting a create session error response rejecting the request towards the MME with a new error cause indicating the PGW mismatch with the network slice subscribed by the UE and with the FQDN or IP address of another PGW that supports the network slice.

As outlined above, Fig. 3A shows a method of the invention. It is noted that other examples are possible, according to some embodiments.

Fig. 3B illustrates an example flow chart of a method of packet data network gateway (PGW) reselection for network slicing, according to one embodiment. In certain example embodiments, the example flow diagram of Fig. 3B may be performed by a network entity or network node in a communications system, such as LTE or 5G NR. In some example embodiments, the network entity performing one or more of the procedures depicted in Fig. 3B may include or be included in a network gateway, such as a PGW, or the like. In some embodiments, as an example, Fig. 3B may include one or more procedures performed by PGW1 in the examples of Figs. 1 and 2.

As illustrated in the example of Fig. 3B, the method may include, at 355, receiving at a PGW, from a MME, a Create Session Request to establish a PDN connection for a UE in EPS. In an embodiment, the method may include, at 360, retrieving a subscription for the at least one UE. For example, the retrieving 360 may include retrieving the user subscription from a UDM or other location in which the user subscription may be stored. According to an embodiment, the method may include, at 365, determining from the user subscription that the PGW does not support a network slice of an APN and/or DNN for which the at least one UE has a subscription. In an embodiment, the method may include, at 370, forwarding the Create Session Request to an other PGW that supports the network slice for which the at least one UE has a subscription, and including a new IE in the forwarded Create Session Request to convey the SGW UDP port number (i.e., source UDP port number of the Create Session Request received by the PGW) such as to enable the other PGW to send a successful Create Session Response directly to the SGW. Upon receipt of this new IE, the other PGW may send the Create Session Response directly to the SGW IP address and UDP port number.

Fig. 4A illustrates a flow chart of a method of packet data network gateway (PGW) reselection for network slicing, according to a claimed embodiment. The flow diagram of Fig. 4A is performed by a network entity or network node in a communications system, such as LTE or 5G NR. In some example embodiments, the network entity performing one or more of the procedures depicted in Fig. 4A may include or be included in a node responsible for signaling, paging, authentication and/or authorization of a mobile device or UE. For instance, in one embodiment, the entity performing the method of Fig. 4A may include a MME. In some embodiments, as an example, Fig. 4A may include one or more procedures performed by the MME in the examples of Figs. 1 and 2.

As illustrated in Fig. 4A, the method includes, at 405, transmitting a request to a PGW to establish a PDN connection for at least one UE in an EPS. The request is a create session request to establish the PDN connection in the EPS. The method includes, at 410, receiving a response from the PGW. The response includes an indication that the PGW does not support a network slice subscribed to by the at least one UE and includes an address of another PGW that supports the network slice. For example, the response may include an indication that there is a PGW mismatch with the network slice subscribed to by the at least one UE and may include an address of another PGW that supports the network slice. In one example, the receiving 410 may include receiving a create session error response rejecting the request towards the MME with a new error cause indicating the PGW mismatch with the network slice subscribed by the UE and with the FQDN or IP address of another PGW that supports the network slice.

The method further includes, at 415, transmitting a request to establish the PDN connection towards the another PGW that supports the network slice. According to an embodiment, the method may include, at 420, receiving a create session response from the another PGW.

Fig. 4B illustrates an example flow chart of a method of packet data network gateway (PGW) reselection for network slicing, according to one embodiment. In certain example embodiments, the example flow diagram of Fig. 4B may be performed by a network entity or network node in a communications system, such as LTE or 5G NR. In some example embodiments, the network entity performing one or more of the procedures depicted in Fig. 4B may include or be included in a network gateway, such as a PGW, or the like. In some embodiments, as an example, Fig. 4B may include one or more procedures performed by PGW2 in the examples of Figs. 1 and 2.

As illustrated in the example of Fig. 4B, the method may include, at 450, receiving a Create Session Request with a new SGW source UDP port IE. The method may include, at 460, transmitting a Create Session Response directly to the SGW indicated in the SGW source UDP port IE.

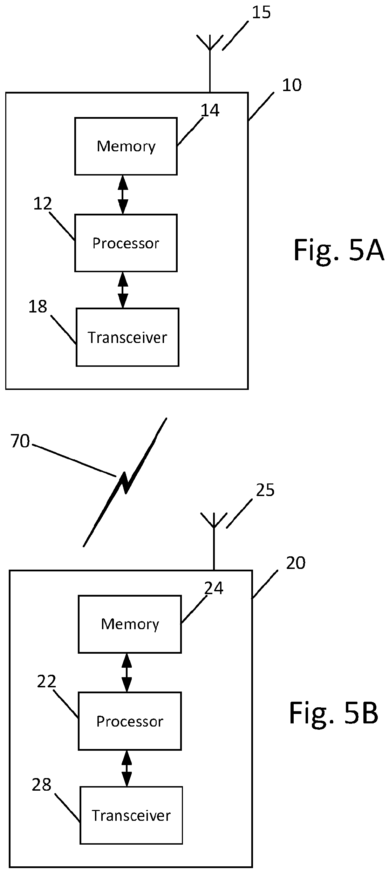

Fig. 5A illustrates an example of an apparatus 10 according to an embodiment. In an embodiment, apparatus 10 may be a node, host, or server in a communications network or serving such a network. For example, apparatus 10 may be a network node, a sensing node, satellite, base station, a Node B, an evolved Node B (eNB), 5G Node B or access point, next generation Node B (NG-NB or gNB), TRP, HAPS, integrated access and backhaul (IAB) node, and/or a WLAN access point, associated with a radio access network, such as a LTE network, 5G or NR. In some example embodiments, apparatus 10 may be a gateway, such as a PGW.

It should be understood that, in some example embodiments, apparatus 10 may be comprised of an edge cloud server as a distributed computing system where the server and the radio node may be stand-alone apparatuses communicating with each other via a radio path or via a wired connection, or they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. It should be noted that one of ordinary skill in the art would understand that apparatus 10 may include components or features not shown in Fig. 5A.

As illustrated in the example of Fig. 5A, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, or any other processing means, as examples. While a single processor 12 is shown in Fig. 5A, multiple processors may be utilized according to other embodiments. For example, it should be understood that, in certain embodiments, apparatus 10 may include two or more processors that may form a multiprocessor system (e.g., in this case processor 12 may represent a multiprocessor) that may support multiprocessing. In certain embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication or communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media, or other appropriate storing means. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15, or may include any other appropriate transceiving means. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device), or an input/output means.

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry/means or control circuitry/means. In addition, in some embodiments, transceiver 18 may be included in or may form a part of transceiver circuitry/means.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be a network element or RAN node, such as a base station, access point, Node B, eNB, gNB, TRP, HAPS, IAB node, WLAN access point, or the like. In one example embodiment, apparatus 10 may be a PGW. According to certain embodiments, apparatus 10 may be controlled by memory 14 and processor 12 to perform the functions associated with any of the embodiments described herein. For example, in some embodiments, apparatus 10 may be configured to perform one or more of the processes depicted in any of the flow charts or signaling diagrams described herein, such as those illustrated in Figs. 1-4 or any other method described herein. In some embodiments, as discussed herein, apparatus 10 may be configured to perform a procedure relating to reselection of a PGW for network slicing, for example.

According to an embodiment, apparatus 10 may be controlled by memory 14 and processor 12 to receive a request from a network entity, such as a MME, to establish PDN connection for at least one UE in an EPS. For example, the request may be a create session request to establish the PDN connection in the EPS. In an embodiment, apparatus 10 may be controlled by memory 14 and processor 12 to retrieve a subscription for the at least one UE. For example, apparatus 10 may be controlled by memory 14 and processor 12 to retrieve the user subscription from a UDM or other location in which the user subscription may be stored. According to an embodiment, apparatus 10 may be controlled by memory 14 and processor 12 to determine from the user subscription that the apparatus 10 does not support a network slice of an APN and/or DNN for which the at least one UE has a subscription.

In some embodiments, when it is determined, after retrieving the user subscription, that the apparatus 10 does not support the network slice of the APN and/or DNN for which the at least one UE has a subscription, apparatus 10 may be controlled by memory 14 and processor 12 to transmit a response to the network entity. The response may include an indication that there is a PGW mismatch with the network slice subscribed to by the at least one UE and may include an address of another PGW that supports the network slice. For example, in an embodiment, apparatus 10 may be controlled by memory 14 and processor 12 to transmit a create session error response rejecting the request towards the MME with a new error cause indicating the PGW mismatch with the network slice subscribed by the UE and with the FQDN or IP address of another PGW that supports the network slice.

Fig. 5B illustrates an example of an apparatus 20 according to another embodiment. In an embodiment, apparatus 20 may be a node, network element, host, or server in a communications network or associated with such a network. For example, apparatus 20 may be a network node, a sensing node, satellite, base station, a Node B, an evolved Node B (eNB), 5G Node B or access point, next generation Node B (NG-NB or gNB), TRP, HAPS, integrated access and backhaul (IAB) node, and/or a WLAN access point, associated with a radio access network, such as a LTE network, 5G or NR. In some example embodiments, apparatus 20 may be a node responsible for signaling, paging, authentication and/or authorization of a mobile device or UE. For instance, in one embodiment, apparatus 20 may be or may include a MME.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in Fig. 5B.

As illustrated in the example of Fig. 5B, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in Fig. 5B, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR.

According to some embodiments, processor 22 and memory 24 may be included in or may form a part of processing circuitry or control circuitry. In addition, in some embodiments, transceiver 28 may be included in or may form a part of transceiving circuitry.

As discussed above, according to some embodiments, apparatus 20 may be a node responsible for signaling, paging, authentication and/or authorization of a mobile device or UE, such as a MME, for example. According to certain embodiments, apparatus 20 may be controlled by memory 24 and processor 22 to perform the functions associated with any of the embodiments described herein, such as one or more of the operations illustrated in, or described with respect to, Fig. 5 or any other method described herein. For example, in an embodiment, apparatus 20 may be controlled to perform a process relating to reselection of a PGW for network slicing.

According to certain embodiments, apparatus 20 may be controlled by memory 24 and processor 22 to transmit a request to a PGW to establish a PDN connection for at least one UE in an EPS. For example, the request may be a create session request to establish the PDN connection in the EPS. According to an embodiment, apparatus 20 may be controlled by memory 24 and processor 22 to receive a response from the PGW. The response may include an indication that the PGW does not support a network slice subscribed to by the at least one UE and may include an address of another PGW that supports the network slice. For example, the response may include an indication that there is a PGW mismatch with the network slice subscribed to by the at least one UE and may include an address of a "correct" PGW that supports the network slice. In an embodiment, the response may be a create session error response rejecting the request towards the MME with a new error cause indicating the PGW mismatch with the network slice subscribed by the UE and with the FQDN or IP address of another PGW that supports the network slice.

In certain embodiments, apparatus 20 may be controlled by memory 24 and processor 22 to transmit a request to establish the PDN connection towards the other, "correct" PGW that supports the network slice. According to an embodiment, apparatus 20 may be controlled by memory 24 and processor 22 to receive a create session response from the other PGW.

In some embodiments, an apparatus (e.g., apparatus 10 and/or apparatus 20) may include means for performing a method, a process, or any of the variants discussed herein. Examples of the means may include one or more processors, memory, controllers, transmitters, receivers, and/or computer program code for causing the performance of the operations.

In view of the foregoing, certain example embodiments provide several technological improvements, enhancements, and/or advantages over existing technological processes and constitute an improvement at least to the technological field of wireless network control and management. As discussed above, certain example embodiments provide procedures for PGW reselection for network slicing in order to support EPS and 5GS interworking. For example, certain embodiments allow a PGW, which receives a request from a network entity to establish a PDN connection for a UE in an EPS, but does not support a network slice for which the UE has a subscription, to determine a correct PGW and indicate that correct PGW to the requesting entity. As such, example embodiments provide an efficient method for PGW reselection. Accordingly, the use of certain example embodiments results in improved functioning of communications networks and their nodes, such as base stations, eNBs, gNBs, and/or IoT devices, UEs or mobile stations.

In some example embodiments, the functionality of any of the methods, processes, signaling diagrams, algorithms or flow charts described herein may be implemented by software and/or computer program code or portions of code stored in memory or other computer readable or tangible media, and may be executed by a processor.

In some example embodiments, an apparatus may include or be associated with at least one software application, module, unit or entity configured as arithmetic operation(s), or as a program or portions of programs (including an added or updated software routine), which may be executed by at least one operation processor or controller. Programs, also called program products or computer programs, including software routines, applets and macros, may be stored in any apparatus-readable data storage medium and may include program instructions to perform particular tasks. A computer program product may include one or more computer-executable components which, when the program is run, are configured to carry out some example embodiments. The one or more computer-executable components may be at least one software code or portions of code. Modifications and configurations required for implementing the functionality of an example embodiment may be performed as routine(s), which may be implemented as added or updated software routine(s). In one example, software routine(s) may be downloaded into the apparatus.

As an example, software or computer program code or portions of code may be in source code form, object code form, or in some intermediate form, and may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality of example embodiments may be performed by hardware or circuitry included in an apparatus, for example through the use of an application specific integrated circuit (ASIC), a programmable gate array (PGA), a field programmable gate array (FPGA), or any other combination of hardware and software. In yet another example embodiment, the functionality of example embodiments may be implemented as a signal, such as a non-tangible means, that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

Example embodiments described herein may apply to both singular and plural implementations, regardless of whether singular or plural language is used in connection with describing certain embodiments. For example, an embodiment that describes operations of a single network node may also apply to embodiments that include multiple instances of the network node, and vice versa.

One having ordinary skill in the art will readily understand that the example embodiments as discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while the scope of protection is defined by the claims.

## Claims

1. A method performed by a packet data network gateway (PGW1), comprising:
receiving (305), from a network entitiy, a create session request message to establish a packet data network, PDN, connection for a user equipment, UE, in an evolved packet system, EPS;
retrieving (310), from a unified data management, UDM, a subscription for the UE;
determining (315) from the subscription that the packet data network gateway (PGW1) does not support a network slice for which the UE has a subscription;
discovering another packet data network gateway (PGW2) that supports the network slice for which the UE has a subscription; and
transmitting (320) a session create response message to the network entity, the create session response message comprising an indication that there is a packet data network gateway (PGW1) mismatch with the network slice subscribed by the UE and an address of the another packet data network gateway (PGW2) that supports the network slice for which the UE has a subscription.

2. The method according to claim 1, wherein the create session response message comprises a create session error response message.

3. The method according to claim 1 or 2, wherein the discovering the another packet data gateway (PGW2) that supports the network slice for which the UE has a subscription comprises discovering the another packet data network gateway (PGW2) by local configuration or by performing a network function, NF, discovery request towards a network repository function, NRF.

4. The method according to any one of claims 1 to 3, wherein the discovering the another packet data network gateway (PGW2) that supports the network slice for which the UE has a subscription comprises discovering an address of the another packet data network gateway (PGW2).

5. The method according to any one of claim 1 to 4, wherein the address of the another packet data network gateway (PGW2) comprises at least one of a fully qualified domain name, FQDN, or internet protocol, IP, address.

6. The method according to any one of claims 1 to 5, wherein the network entity comprises a mobility management entity.

7. A method performed by a network entity, comprising:
transmitting (405) a create session request message to a packet data network gateway (PGW1) to establish a packet data network, PDN, connection for a user equipment, UE, in an evolved packet system, EPS;
receiving (410) a create session response message from the packet data network gateway (PGW1), the create session response message comprising an indication that the packet data network gateway (PGW1) does not support a network slice subscribed by the UE and an address of another packet data network gateway (PGW2) that supports the network slice for which the UE has a subscription; and
transmitting (415) another session create request mesage to establish the PDN connection towards said another packet data network gateway (PGW2) that supports the network slice for which the UE has a subscription.

8. The method according to claim 7, further comprising receiving another create session response message from the another packet data network gateway (PGW2).

9. The method according to claim 7 or 8, wherein the create session response message from the packet data network gateway (PGW1) comprises a create session error response message.

10. The method according to any one of claims 7 to 9, wherein the address of the another packet data network gateway (PGW2) comprises at least one of a fully qualified domain name, FQDN, or internet protocol, IP, address.

11. The method according to any one of claims 7 to 10, wherein the network entity comprises a mobility management entity.

12. A packet data network gateway (PGW1), comprising:
means for receiving, from a network entitiy, a create session request message to establish a packet data network, PDN, connection for a user equipment, UE, in an evolved packet system, EPS;
means for retrieving, from a unified data management, UDM, a subscription for the UE;
means for determining from the subscription that the packet data network gateway (PGW1) does not support a network slice for which the user equipment, UE, has a subscription;
means for discovering a packet data network gateway (PGW2) that supports the network slice for which the UE has a subscription; and
means for transmitting a session create response message to the network entity, the create session response message comprising an indication that there is a packet data network gateway (PGW1) mismatch with the network slice subscribed by the UE and an address of the packet data network gateway (PGW2) that supports the network slice for which the UE has a subscription.

13. A network entity, comprising:
means for transmitting a create session request message to a packet data network gateway (PGW1) to establish a packet data network, PDN, connection for a user equipment, UE, in an evolved packet system, EPS;
means for receiving a create session response message from the packet data network gateway (PGW1), the create session response message comprising an indication that the packet data network gateway (PGW1) does not support a network slice subscribed by the UE and an address of another packet data network gateway (PGW2) that supports the network slice for which the UE has a subscription; and
means for transmitting another session create request mesage to establish the PDN connection towards said another packet data network gateway (PGW2) that supports the network slice for which the UE has a subscription.

14. A packet data network gateway according to claim 12, further comprising means for performing a method according to any one of claims 2 to 6.

15. A computer program comprising instructions which, when executed by a processor of a packet data network gateway, cause the processor to perform a method according to any of claims 1 to 6.

## Patentansprüche

1. Verfahren, das von einem Paketdatennetzwerkgateway (PGW1) durchgeführt wird und Folgendes umfasst:
Empfangen (305) einer Sitzungseinrichtungsanforderungsnachricht zum Aufbauen einer Paketdatennetzwerk(PDN)-Verbindung für eine Teilnehmereinrichtung, UE, in einem entwickelten Paketsystem, EPS, von einer Netzwerkentität;
Abrufen (310) einer Subskription für die UE von einer vereinheitlichten Datenverwaltung, UDM;
Bestimmen (315) anhand der Subskription, dass das Paketdatennetzwerkgateway (PGW1) eine Netzwerkslice, für die die UE eine Subskription hat, nicht unterstützt;
Entdecken eines weiteren Paketdatennetzwerkgateways (PGW2), das die Netzwerkslice, für die die UE eine Subskription hat, unterstützt; und
Übertragen (320) einer Sitzungseinrichtungsantwortnachricht zur Netzwerkentität, wobei die Sitzungseinrichtungsantwortnachricht eine Anzeige umfasst, dass eine Paketdatennetzwerkgateway (PGW1) -Nichtübereinstimmung mit der Netzwerkslice, die durch die UE subskribiert wird, und einer Adresse des weiteren Paketdatennetzwerkgateways (PGW2) vorliegt, das die Netzwerkslice unterstützt, für die die UE eine Subskription hat.

2. Verfahren nach Anspruch 1, wobei die Sitzungseinrichtungsantwortnachricht eine Sitzungseinrichtungsfehlerantwortnachricht umfasst.

3. Verfahren nach Anspruch 1 oder 2, wobei das Entdecken des weiteren Paketdatengateways (PGW2), das die Netzwerkslice unterstützt, für die die UE eine Subskription hat, das Entdecken des weiteren Paketdatennetzwerkgateways (PGW2) durch eine lokale Auslegung oder durch Durchführen einer Netzwerkfunktions(NF)-Entdeckungsanforderung bei einer Netzwerkrepositoriumsfunktion, NRF, umfasst.

4. Verfahren nach einem der Ansprüche 1 bis 3, wobei das Entdecken des weiteren Paketdatennetzwerkgateways (PGW2), das die Netzwerkslice unterstützt, für die die UE eine Subskription hat, das Entdecken einer Adresse des weiteren Paketdatennetzwerkgateways (PGW2) umfasst.

5. Verfahren nach einem der Ansprüche 1 bis 4, wobei die Adresse des weiteren Paketdatennetzwerkgateways (PGW2) mindestens eines von einem vollständig qualifizierten Domänennamen, FQDN, oder einer Internetprotokoll(IP)-Adresse umfasst.

6. Verfahren nach einem der Ansprüche 1 bis 5, wobei die Netzwerkentität eine Mobilitätsverwaltungsentität umfasst.

7. Verfahren, das von einer Netzwerkentität durchgeführt wird und Folgendes umfasst:
Übertragen (405) einer Sitzungseinrichtungsanforderungsnachricht zu einem Paketdatennetzwerkgateway (PGW1), um eine Paketdatennetzwerk(PDN)-Verbindung für eine Teilnehmereinrichtung, UE, in einem entwickelten Paketsystem, EPS, aufzubauen;
Empfangen (410) einer Sitzungseinrichtungsantwortnachricht vom Paketdatennetzwerkgateway (PGW1), wobei die Sitzungseinrichtungsantwortnachricht eine Anzeige, dass das Paketdatennetzwerkgateway (PGW1) eine Netzwerkslice, die durch die UE subskribiert wird, nicht unterstützt, und eine Adresse eines weiteren Paketdatennetzwerkgateways (PGW2) umfasst, die die Netzwerkslice unterstützt, für die die UE eine Subskription hat; und
Übertragen (415) einer weiteren Sitzungseinrichtungsanforderungsnachricht, um die PDN-Verbindung zum weiteren Paketdatennetzwerkgateway (PGW2) aufzubauen, das die Netzwerkslice unterstützt, für die die UE eine Subskription hat.

8. Verfahren nach Anspruch 7, das ferner das Empfangen einer weiteren Sitzungseinrichtungsantwortnachricht vom weiteren Paketdatennetzwerkgateway (PGW2) umfasst.

9. Verfahren nach Anspruch 7 oder 8, wobei die Sitzungseinrichtungsantwortnachricht vom Paketdatennetzwerkgateway (PGW1) eine Sitzungseinrichtungsfehlerantwortnachricht umfasst.

10. Verfahren nach einem der Ansprüche 7 bis 9, wobei die Adresse des weiteren Paketdatennetzwerkgateways (PGW2) mindestens eines von einem vollständig qualifizierten Domänennamen, FQDN, oder einer Internetprotokoll(IP)-Adresse umfasst.

11. Verfahren nach einem der Ansprüche 7 bis 10, wobei die Netzwerkentität eine Mobilitätsverwaltungsentität umfasst.

12. Paketdatennetzwerkgateway (PGW1), das Folgendes umfasst:
Mittel zum Empfangen einer Sitzungseinrichtungsanforderungsnachricht zum Aufbauen einer Paketdatennetzwerk(PDN)-Verbindung für eine Teilnehmereinrichtung, UE, in einem entwickelten Paketsystem, EPS, von einer Netzwerkentität;
Mittel zum Abrufen einer Subskription für die UE von einer vereinheitlichten Datenverwaltung, UDM;
Mittel zum Bestimmen anhand der Subskription, dass das Paketdatennetzwerkgateway (PGW1) eine Netzwerkslice, für die die Teilnehmereinrichtung, UE, eine Subskription hat, nicht unterstützt;
Mittel zum Entdecken eines Paketdatennetzwerkgateways (PGW2), das die Netzwerkslice, für die die UE eine Subskription hat, unterstützt; und
Mittel zum Übertragen einer Sitzungseinrichtungsantwortnachricht zur Netzwerkentität, wobei die Sitzungseinrichtungsantwortnachricht eine Anzeige umfasst, dass eine Paketdatennetzwerkgateway(PGWl)-Nichtübereinstimmung mit der Netzwerkslice, die durch die UE subskribiert wird, und einer Adresse des Paketdatennetzwerkgateways (PGW2) vorliegt, das die Netzwerkslice unterstützt, für die die UE eine Subskription hat.

13. Netzwerkentität, die Folgendes umfasst:
Mittel zum Übertragen einer Sitzungseinrichtungsanforderungsnachricht zu einem Paketdatennetzwerkgateway (PGW1), um eine Paketdatennetzwerk(PDN)-Verbindung für eine Teilnehmereinrichtung, UE, in einem entwickelten Paketsystem, EPS, aufzubauen;
Mittel zum Empfangen einer Sitzungseinrichtungsantwortnachricht vom Paketdatennetzwerkgateway (PGW1), wobei die Sitzungseinrichtungsantwortnachricht eine Anzeige, dass das Paketdatennetzwerkgateway (PGW1) eine Netzwerkslice, die durch die UE subskribiert wird, nicht unterstützt, und eine Adresse eines weiteren Paketdatennetzwerkgateways (PGW2) umfasst, das die Netzwerkslice unterstützt, für die die UE eine Subskription hat; und
Mittel zum Übertragen einer weiteren Sitzungseinrichtungsanforderungsnachricht, um die PDN-Verbindung zum weiteren Paketdatennetzwerkgateway (PGW2) aufzubauen, das die Netzwerkslice unterstützt, für die die UE eine Subskription hat.

14. Paketdatennetzwerkgateway nach Anspruch 12, das ferner Mittel zum Durchführen eines Verfahrens nach einem der Ansprüche 2 bis 6 umfasst.

15. Computerprogramm, das Anweisungen umfasst, die, wenn sie von einem Prozessor eines Paketdatennetzwerkgateways ausgeführt werden, den Prozessor veranlassen, ein Verfahren nach einem der Ansprüche 1 bis 6 durchzuführen.

## Revendications

1. Procédé réalisé par une passerelle de réseau de données par paquets (PGW1), comprenant les étapes suivantes :
recevoir (305) d'une entité de réseau un message de demande de création de session pour établir une connexion de réseau de données par paquets, PDN, pour un équipement utilisateur, UE, dans un système par paquets évolué, EPS ;
récupérer (310) un abonnement pour l'UE à partir d'une gestion unifiée des données, UDM ;
déterminer (315) à partir de l'abonnement que la passerelle de réseau de données par paquets (PGW1) ne prend pas en charge une tranche de réseau pour laquelle l'UE a un abonnement ;
trouver une autre passerelle de réseau de données par paquets (PGW2) qui prend en charge la tranche de réseau pour laquelle l'UE a un abonnement ; et
transmettre (320) un message de réponse de création de session à l'entité de réseau, le message de réponse de création de session comprenant une indication de non-concordance entre une passerelle de réseau de données par paquets (PGW1) et la tranche de réseau souscrite par l'UE, et une adresse de l'autre passerelle de réseau de données par paquets (PGW2) qui prend en charge la tranche de réseau pour laquelle l'UE a un abonnement.

2. Procédé selon la revendication 1, dans lequel le message de réponse de création de session comprend un message de réponse d'erreur de création de session.

3. Procédé selon la revendication 1 ou 2, dans lequel la recherche de l'autre passerelle de données par paquets (PGW2) qui prend en charge la tranche de réseau pour laquelle l'UE a un abonnement comprend la recherche de l'autre passerelle de réseau de données par paquets (PGW2) par une configuration locale ou en effectuant une demande de recherche de fonction de réseau, NF, vers une fonction de référentiel de réseau, NRF.

4. Procédé selon l'une des revendications 1 à 3, dans lequel la recherche de l'autre passerelle de réseau de données par paquets (PGW2) qui prend en charge la tranche de réseau pour laquelle l'UE a un abonnement comprend la recherche d'une adresse de l'autre passerelle de réseau de données par paquets (PGW2).

5. Procédé selon l'une des revendications 1 à 4, dans lequel l'adresse de l'autre passerelle de réseau de données par paquets (PGW2) comprend un nom de domaine entièrement qualifié, FQDN, et/ou une adresse de protocole internet, IP.

6. Procédé selon l'une des revendications 1 à 5, dans lequel l'entité de réseau comprend une entité de gestion de la mobilité.

7. Procédé réalisé par une entité de réseau, comprenant les étapes suivantes :
transmettre (405) un message de demande de création de session à une passerelle de réseau de données par paquets (PGW1) pour établir une connexion de réseau de données par paquets, PDN, pour un équipement utilisateur, UE, dans un système par paquets évolué, EPS ;
recevoir (410) un message de réponse de création de session en provenance de la passerelle de réseau de données par paquets (PGW1), le message de réponse de création de session comprenant une indication selon laquelle la passerelle de réseau de données par paquets (PGW1) ne prend pas en charge une tranche de réseau souscrite par l'UE, et une adresse d'une autre passerelle de réseau de données par paquets (PGW2) qui prend en charge la tranche de réseau pour laquelle l'UE a un abonnement ; et
transmettre (415) un autre message de demande de création de session pour établir la connexion PDN vers cette autre passerelle de réseau de données par paquets (PGW2) qui prend en charge la tranche de réseau pour laquelle l'UE a un abonnement.

8. Procédé selon la revendication 7, comprenant en outre la réception d'un autre message de réponse de création de session en provenance de l'autre passerelle de réseau de données par paquets (PGW2).

9. Procédé selon la revendication 7 ou 8, dans lequel le message de réponse de création de session en provenance de la passerelle de réseau de données par paquets (PGW1) comprend un message de réponse d'erreur de création de session.

10. Procédé selon l'une des revendications 7 à 9, dans lequel l'adresse de l'autre passerelle de réseau de données par paquets (PGW2) comprend un nom de domaine entièrement qualifié, FQDN, et/ou une adresse de protocole internet, IP.

11. Procédé selon l'une des revendications 7 à 10, dans lequel l'entité de réseau comprend une entité de gestion de la mobilité.

12. Passerelle de réseau de données par paquets (PGW1), comprenant :
des moyens pour recevoir d'une entité de réseau un message de demande de création de session pour établir une connexion de réseau de données par paquets, PDN, pour un équipement utilisateur, UE, dans un système par paquets évolué, EPS ;
des moyens pour récupérer un abonnement pour l'UE à partir d'une gestion unifiée des données, UDM ;
des moyens pour déterminer à partir de l'abonnement que la passerelle de réseau de données par paquets (PGW1) ne prend pas en charge une tranche de réseau pour laquelle l'équipement utilisateur, UE, a un abonnement ;
des moyens pour trouver une passerelle de réseau de données par paquets (PGW2) qui prend en charge la tranche de réseau pour laquelle l'UE a un abonnement ; et
des moyens pour transmettre un message de réponse de création de session à l'entité de réseau, le message de réponse de création de session comprenant une indication de non-concordance entre une passerelle de réseau de données par paquets (PGW1) et la tranche de réseau souscrite par l'UE, et une adresse de la passerelle de réseau de données par paquets (PGW2) qui prend en charge la tranche de réseau pour laquelle l'UE a un abonnement.

13. Entité de réseau, comprenant :
des moyens pour transmettre un message de demande de création de session à une passerelle de réseau de données par paquets (PGW1) pour établir une connexion de réseau de données par paquets, PDN, pour un équipement utilisateur, UE, dans un système par paquets évolué, EPS ;
des moyens pour recevoir un message de réponse de création de session en provenance de la passerelle de réseau de données par paquets (PGW1), le message de réponse de création de session comprenant une indication selon laquelle la passerelle de réseau de données par paquets (PGW1) ne prend pas en charge une tranche de réseau souscrite par l'UE, et une adresse d'une autre passerelle de réseau de données par paquets (PGW2) qui prend en charge la tranche de réseau pour laquelle l'UE a un abonnement ; et
des moyens pour transmettre un autre message de demande de création de session pour établir la connexion PDN vers cette autre passerelle de réseau de données par paquets (PGW2) qui prend en charge la tranche de réseau pour laquelle l'UE a un abonnement.

14. Passerelle de réseau de données par paquets selon la revendication 12, comprenant en outre des moyens pour réaliser un procédé selon l'une des revendications 2 à 6.

15. Programme informatique comprenant des instructions qui, lorsqu'elles sont exécutées par un processeur d'une passerelle de réseau de données par paquets, amènent le processeur à réaliser un procédé selon l'une des revendications 1 à 6.
